# EUROPEAN PATENT APPLICATION

(11) **EP 4 390 662 A1**
(43) Date of publication of application: **26.06.2024**
(21) Application number: 22214568.2
(22) Date of filing: 19.12.2022
(51) Int. Cl.: G06F 7/58

(54) **RANDOM NUMBER GENERATOR**

(71) Applicant: ID Quantique S.A., 1227 Carouge (CH)
(72) Inventor: BUSSIÈRES, Félix, 1234 Vessy (CH); GRAS, Gaëtan, 74000 Annecy (FR); BOSO, Gianluca, 1213 Petit-Lancy (CH); LAYAT, Kevin, 74930 Pers-Jussy (FR)
(74) Representative: Kraus & Lederer PartGmbB

(57) **Abstract**

The present invention generally relates to a random number generator (100, 400, 500, 600, 800) comprising a light sensor (110, 310, 710, 810), comprising a plurality of pixels (111, 311, P0-Pn) configured to output a corresponding plurality of digital signals (S0-Sn), each digital signal encoding a digital value representative of an amount of light reaching the respective pixel (111, 311, P0-Pn, P'0-P'n), and a controller (120), configured to generate (S240) a random number (RN) based on at least part of at least one of the plurality of digital signals (S0-Sn).

## Description

The present invention relates to a random number generator capable of generating random numbers based on entropy present in light, preferably in light available from the environment.

### State of the art

Random number generators are known to be based on a light sensor receiving light from a light emitter and generating random numbers based on entropy present the light. An example of this architecture can be found in EP 2 940 923 A1.

This configuration requires the presence of a light emitter, with the related costs, complexity, energy consumption and space requirements, which makes it difficult to integrate it into smaller devices, and in particular portable devices. Moreover, failure of the light emitter results in failure of the random number generator, thus introducing a potential reliability issue.

It is an object of the invention to provide a random number generator which overcomes the disadvantages above.

### Summary of the invention

The object above is achieved by the invention, which is defined by the independent claims. The dependent claims define further advantageous aspects of the invention.

An embodiment of the invention can therefore relate to a random number generator comprising a light sensor, comprising a plurality of pixels configured to output a corresponding plurality of digital signals, each digital signal encoding a digital value representative of an amount of light reaching the respective pixel, and a controller, configured to generate a random number based on at least part of at least one of the plurality of digital signals.

Thanks to this approach it is advantageously possible to reuse light sensors already available in most modern electronic devices for generating the random number, preferably based on ambient light, so that no additional hardware is needed for the generation of the random number.

In some embodiments, the controller can be configured to
- receive the plurality of digital signals,
- analyze the plurality of digital signals,
- select at least one digital signal having a digital value higher than a predetermined minimum value and/or lower than a predetermined maximum value,
- generate a random number based on the selected at least one digital signal.

Thanks to this approach it is advantageously possible to select one or more pixels which have an illumination level that leads to a sufficiently good entropy value.

In some embodiments, wherein the light sensor can comprise a filter, the filter being configured to cause
- at least a first one, preferably a first plurality, of the plurality of pixels to receive only green light,
- at least a second one, preferably a second plurality, of the plurality of pixels to receive only red light,
- at least a third one, preferably a third plurality, of the plurality of pixels to receive only blue light.

In particular, the controller can be configured to generate the random number based on digital signals outputted from the first one, preferably the first plurality, of the plurality of pixels.

Thanks to this approach it is advantageously possible to use pixels receiving green light for the generation of the random number, since the green light component has been found to provide higher entropy than the other light components.

In some embodiments, the controller can be configured to generate the random number based on digital signals outputted from at least two pixels.

Thanks to this approach it is advantageously possible to still generate a random number even in the presence of a failure, or lack of illumination, of one pixel.

In some embodiments, the controller can be configured to generate the random number by a digital combination of the digital signals outputted from at least two pixels. The digital combination can be preferably an XOR, a sum, or a difference of the digital signals.

Thanks to this approach it is advantageously possible to increase privacy, since no meaningful picture can be derived from the data resulting from the combination of the two signals.

In some embodiments, the at least two pixels can belong to the first plurality.

Thanks to this approach it is advantageously possible to increase privacy and use pixels with a higher entropy.

In some embodiments, the random number generator can further comprise privacy means configured to process the plurality of digital signals before providing those to the controller. The privacy means can in particular be configured to process the plurality of digital signals so that a content of an image, recognizable when decoding the plurality of digital signals, can be no longer recognizable when decoding the plurality of processed digital signals.

Thanks to this approach it is advantageously possible to increase privacy of the user, by avoiding full picture data to be made available to a processing unit such as the controller.

In some embodiments, the privacy means can be configured to transmit only a subset of the plurality of digital signals to the controller.

Thanks to this approach it is advantageously possible to implement the privacy means in a simple and yet effective manner.

In some embodiments, the subset of the plurality of digital signals can be less than 15%, preferably less than 10%, even more preferably less than 5%.

Thanks to this approach it is advantageously possible to transmit a very limited amount of data, which makes reconstructing any image taken by the light source highly complex, or impossible, thus increasing the privacy of the user.

In some embodiments, each of plurality of digital signals can be codified on a plurality of bits, and the privacy means can be configured to transmit only a subset of the plurality of bits to the controller.

Thanks to this approach it is advantageously possible to implement the privacy means in a simple and yet effective manner.

In some embodiments, the subset can be a minority of the plurality of bits, and/or the subset can be configured not to comprise the least significant bit of the plurality of bits, and/or the subset can be configured not to comprise the most significant bit of the plurality of bits.

Thanks to this approach it is advantageously possible to select a subset which increases privacy of the user while also advantageously allowing a selection of bits which have been found to contain higher usable entropy for the generation of the random number.

In some embodiments, the random number generator can further comprise an ambient light sensor. In some embodiments, the ambient light sensor can be implemented by the light sensor itself operating as an ambient light sensor. The ambient light sensor can be configured to provide the controller with an indication of an amount of ambient light, and the controller can be configured to instruct the light sensor to generate the plurality of digital signals based on the amount of ambient light.

Thanks to this approach it is advantageously possible to increase the numbers of potentially usable pixels, as the capturing characteristics of the light sensor, such as capturing time, and/or capturing sensitivity, can be configured on the basis of the measured ambient light, so as to result in an increased entropy in the signals outputted by the light sensor.

In some embodiments, the controller can be configured to instruct the light sensor to generate the plurality of digital signals when the amount of ambient light is higher than a predetermined minimum value and/or lower than a predetermined maximum value. In particular, the controller can be configured to instruct the light sensor to generate the plurality of digital signals only when the amount of ambient light is higher than a predetermined minimum value and/or only when lower than a predetermined maximum value.

Thanks to this approach it is advantageously possible to generate the plurality of digital signals by capturing an image through the light sensor only if an amount of light is present which is judged to be compatible with the generation of a random number.

In some embodiments, the random number generator can further comprise a light source. The controller can be configured to instruct the light source to generate light when the amount of ambient light is lower than a predetermined minimum value.

Thanks to this approach it is advantageously possible to generate additional light, if the ambient light is judged not to be sufficient for generating a random number.

In some embodiments, the random number generator can further comprise a second light sensor, the second light sensor comprising a plurality of pixels configured to output a corresponding plurality of second digital signals encoding a digital value. The controller can be configured to generate a random number based on at least part of at least one of the plurality of digital signals combined with at least part of at least one of the plurality of second digital signals.

Thanks to this approach it is advantageously possible to increase the likelihood of at least one of the light sensors to provide usable entropy for the generation of the random number.

In some embodiments, the controller can be configured to combine the at least part of at least one of the plurality of digital signals with the at least part of at least one of the plurality of second digital signals, so that a content of an image, recognizable when decoding the plurality of digital signals, or when decoding the plurality of second digital signals, can be no longer recognizable when decoding the plurality of processed digital signals or when decoding the plurality of second digital signals.

Thanks to this approach it is advantageously possible to increases privacy for the user.

In some embodiments, the light sensor can further comprise a plurality of dark pixels configured to output a corresponding plurality of third digital signals encoding a digital value. The controller can be configured to generate a random number based on at least part of at least one of the plurality of digital signals combined with at least part of at least one of the plurality of third digital signals.

Thanks to this approach it is advantageously possible to increase the sources of entropy for the generation of the random number.

In some embodiments, the controller can be configured to XOR the at least part of at least one of the plurality of digital signals to the at least part of at least one of the plurality of third digital signals.

Thanks to this approach it is advantageously possible to achieve the combination in an effective manner.

In some embodiments, the random number generator can further comprise a light source. The controller can be configured to instruct the light source to generate light when the plurality of digital signals indicate that amount of ambient light can be lower than a predetermined minimum value.

Thanks to this approach it is advantageously possible to generate additional light if it is deemed that insufficient ambient light is present for the generation of the random number, by using a light source, such as for instance a flash light, which is available in several electronic devices.

In some embodiments, the light source can be configured to output infrared light.

Thanks to this approach it is advantageously possible to achieve light generation also in dark environments without causing disturbance to the user.

In some embodiments, the controller can be configured to measure ambient light, and to generate the random number based on the combination of at least part of a subset among the plurality of digital signals, if it can be determined that ambient light can be lower than a predetermined minimum value.

Thanks to this approach it is advantageously possible to provide sufficient light, and thus entropy, by adding luminosity from different pixels together.

In some embodiments, each of plurality of digital signals can be codified on a plurality of bits, and the controller can be further configured to generate the random number based on a subset of the plurality of bits.

Thanks to this approach, it is advantageously possible to select bits, such as for instance bits closer to the lower significant region of the plurality of bits, which have been found to comprise more entropy.

In some embodiments, the plurality of bits can consist of a plurality of least significant bits and a plurality of most significant bits, the subset of the plurality of bits can comprise more bits from the plurality of least significant bits than from the plurality of most significant bits.

Thanks to this approach, it is advantageously possible to select bits that have been found to comprise more entropy.

In some embodiments, the random number generator can further comprise a light source, wherein the light sensor can be implemented as a CMOS sensor in a Silicon layer, and the light source can be implemented as Si-LED in the same Silicon layer.

Thanks to this approach it is advantageously possible to implement the random number generator in a compact manner on a single Silicon layer.

In some embodiments, the controller can be implemented as CMOS circuitry in the same Silicon layer.

Thanks to this approach it is advantageously possible to also implement the CMOS circuitry in the same Silicon layer.

In some embodiments, the random number generator can further comprise a reflective layer covering at least the light sensor and the light source.

Thanks to this approach it is advantageously possible to redirect the light from the light source towards the light sensor.

A further embodiment of the invention can relate to an electronic device, comprising the random number generator according to any previous embodiment, wherein the electronic device can be any of a mobile phone, a smartphone, a tablet, a laptop, a PC and a smartwatch.

Thanks to this approach it is advantageously possible to implement the random number generator in any of those devices without adding specific hardware for the generation of the random number.

In some embodiments, the light sensor can be any of a camera, an ambient light sensor, an optical time-of-flight sensor.

Thanks to this approach it is advantageously possible to implement the random number generator in any of those devices without adding specific hardware for the generation of the random number.

In some embodiments, the light sensor can be configured to generate the plurality of digital signals by taking at least one picture, preferably without user input.

Thanks to this approach it is advantageously possible to collect random pictures, which increase entropy content for the generation of the random number.

In some embodiments, the light sensor can be configured to generate the plurality of digital signals by taking a plurality of consecutive pictures.

Thanks to this approach it is advantageously possible to increase security by comparing those pictures to identify attacks.

In some embodiments, the electronic device can further comprise an accelerometer. The controller can be configured to control the light sensor to take the at least one picture or the plurality of consecutive pictures when the accelerometer indicates movement lower than a predetermined threshold.

Thanks to this approach it is advantageously possible to take a picture when the electronic device is not in use, as detected by the accelerometer. This reduces the risk of the user being imaged in the picture, increases the privacy. Moreover, if the electronic device is not in use, the generation of the random number does not impact the performances of the electronic device.

### Brief description of the drawings

Figure 1A schematically illustrates a random number generator 100;
Figure 1B schematically illustrates a light sensor 110 which can be used in a random number generator 100;
Figure 1C schematically illustrates a digital signal S0 which can be an example of a signal outputted by the light sensor 110;
Figure 2 schematically illustrates a method for generating random numbers 200;
Figure 3 schematically illustrates a light sensor 310;
Figure 4 schematically illustrates a random number generator 400;
Figure 5 schematically illustrates a random number generator 500;
Figure 6 schematically illustrates a random number generator 600;
Figure 7 schematically illustrates a light sensor 710;
Figure 8 schematically illustrates a random number generator 800.

### Description of preferred embodiments

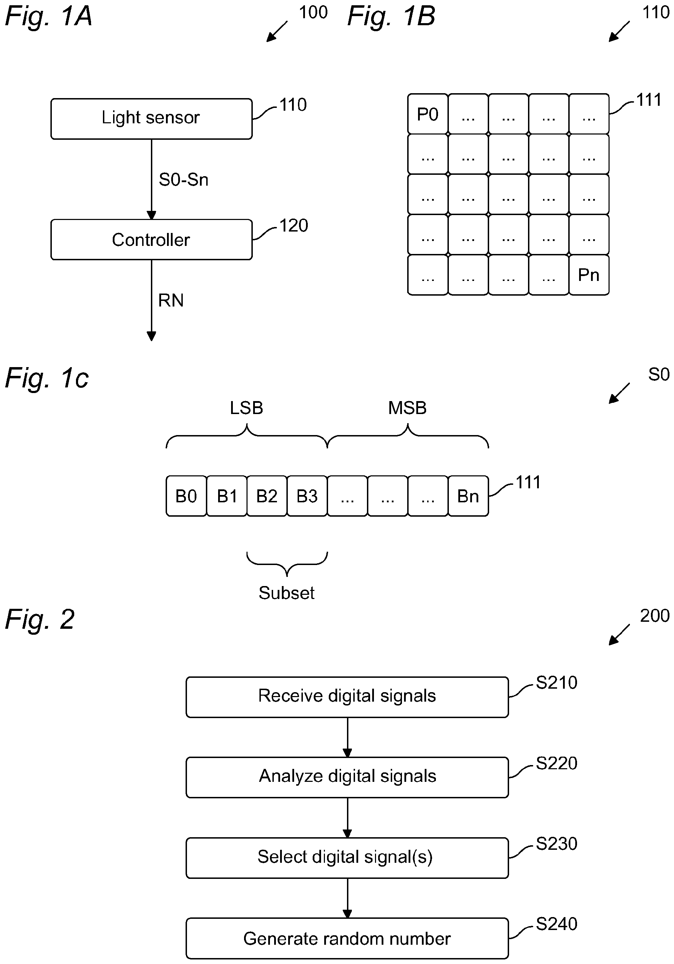

Figure 1A schematically illustrates a random number generator 100. Random number generator 100 comprises a light sensor 110 and a controller 120. As will become clearer from the following, the random number generator 100 is generally based on the concept of creating one or more random bits from a conversion of light into a digital signal.

The light sensor 110, which is further illustrated in figure 1B, comprises a plurality of pixels 111 configured to output a corresponding plurality of digital signals S0-Sn encoding a digital value. In figure 1B, the pixels 111 comprise pixels P0-Pn. In some embodiment, at least one of the pixels 111, preferably a majority of pixels 111, can output a digital signal. That is, for instance, pixel P0 can output a digital signal S0, pixel P1 can output a digital signal S1, etc.

In the context of this application, it is understood that a pixel can comprise at least one light sensing element, for instance a CMOS light sensor. Known light sensing elements generally output an analogue voltage which is a function of the light reaching the sensing element. It is further understood that the pixel can output a digital signal which is a function of this analogue signal in a known manner. For instance, this can be achieved by incorporating a converting circuitry, not illustrated, configured to convert the analogue signal outputted by the light sensing element into a digital value. That is, in some embodiments, a pixel can comprise a light sensing element and an analogue to digital converter. In some further embodiments, one analogue to digital converter can be shared among a plurality of pixels.

The skilled person will therefore be aware that several options are known for obtaining a digital signal, encoding a digital value, representative of an amount of light reaching the respective pixel. In the context of the invention reference will just generally be made to a digital signal being outputted by a respective pixel, without a more detailed description of how this can be achieved, as the skilled person is aware of several manners for doing so.

The controller 120 is configured to generate a random number, RN, based on at least part of at least one of the pluralities of digital signals S0-Sn. This will be described in more details in the following, for instance with reference to step S240 of method 200.

That is, the light sensor 110 can be operated to measure ambient light and the controller can be operated to generate a random number on the basis of this measurement. This is particularly advantageous as it does no longer need any light source, which is present in the prior art. That is, in some preferred embodiment the random number generator can be implemented without a light source, or, preferably, without a light source configured to shine light into the light sensor 110. This is particularly advantageous since it allows the invention to be implemented in most current portable devices, such as smartphones or tablets, without the need for any new hardware, such as alight source.

This, in addition to saving energy at the random number generator, is particularly advantageous as it can increase the security of the signal outputted by the light sensor 110, since the characteristics of the ambient light are not known a priori by a potential hacker, as it might instead be the case where the light source 110 is illuminated by a known light source with predetermined characteristics.

In general, the controller 120 can therefore be configured to receive the plurality of digital signals S0-Sn. With reference to figure 2, this can be implemented, for instance, by step S210. Several manners are known for transferring digital signals and any of them can be implemented in the invention. It should in particular be noted that the controller 120 and the light sensor 110 do not necessarily need to be implemented in a single unit. For instance, the controller 110 could be implemented as part of a CPU of a device in which the random number generator 100 is implemented. Furthermore, the controller 120 can be implemented by software, as will be clear to those skilled in the art.

The controller 120 can be further configured to analyze the plurality of digital signals S0-Sn. With reference to figure 2, this can be implemented, for instance, by step S220. In some embodiments, the step of analyzing can comprise retrieving the digital values encoded by the digital signals, which might be encoded according to any predetermined standard. In some embodiments, the step of analyzing can further comprise ordering the digital values according to a predetermined ordering configured to facilitate the section step S230. For instance, the digital values can be ordered in an increasing, or decreasing, order.

The controller 120 can be further configured to analyze the plurality of digital signals S0-Sn and select at least one digital signal having a digital value higher than a predetermined minimum value and/or lower than a predetermined maximum value. With reference to figure 2, this can be implemented, for instance, by step S230.

Specific numerical values for the minimum and maximum predetermined values are generally technology dependent. However, in some preferred embodiments, it has been found that, given a whole range for the digital signal from 0 to X, the predetermined minimum value can be preferably 0.1X, even more preferably 0.2X. Alternatively, or in addition, the predetermined maximum value can be preferably 0.9X, even more preferably 0.8X.

The selection step is particularly advantageous as it allows selecting digital values which comprise a higher level of entropy. That is, the digital value of a given pixel is representative of an amount of light reaching the respective pixel so that the lowest digital value can be associated to no light, or to light below a minimum threshold, and/or the highest digital value can be associated to a light saturation, or to light above a maximum threshold. In this context, it has been recognized by the inventors that values too close to the lowest digital value and to the highest digital value generally have lower entropy level than values in the middle of the range, as far as entropy from the light reaching the pixel is concerned. In particular, in both cases, the least significant bits still present a large entropy. However, the entropy of these bits is influenced by the electronic and thermal noise and the light itself, when present. As will be discussed, it is preferable to use light as entropy source, since it is a better entropy quality than electronic and thermal noise. In this respect, using values too close to the lowest digital value and to the highest digital value is therefore not ideal.

This can be understood by recognizing that the lowest digital value and the highest digital value, for instance 00000000 and 11111111 - for a digital signal having 8 bits and a binary encoding - have zero entropy, since their value is known a priori. This is in particular true for each bit of those signals. When moving away from the two extremes, many bits nevertheless maintain a low, or even zero, entropy. For instance, for digital values very close to the lowest level, such as 00000001, 00000010, 00000011, 00000100, etc., when the rightmost bit is the least significant bit, it can be seen how the most significant bits remain at a constant, and predictable, value, thus comprising no entropy. The same is clearly the case for values close to the maximum such as 11111110, 11111101, 11111100, 11111011, etc. As visible, the bits which change, namely those with lower significant value, are affected by light but also by electronic and thermal noise. Using light as source of entropy can be preferred, so that it is preferable to use digital values where entropy is present also on bits other than those with the lower significant value.

The inventors have thus realized that the entropy of the digital signal, and more specifically of the various bits comprised in the digital signal, increase when the value of the digital signal is higher than a predetermined minimum value and/or lower than a predetermined maximum value. In particular, the number of bits have a usable entropy, thus of bits usable for generating the random number, increases. This is advantageous since a higher number of usable bits is known to increase the total entropy of the generated random number.

The controller 120 can be further configured to generate a random number, RN, based on the selected at least one digital signal. That is, generally a given digital signals S0-Sn can encode a digital value on a plurality of bits B0-Bn. One or more of those bits can have a given entropy, as the bit value is dependent on the amount of light reaching the respective pixel and is thus now known a priori. The controller can thus use this entropy for generating the random number, RN, in several known manners.

Those skilled in the art are in particular aware that combining the entropy of a plurality of bits B0-Bn and/or combining the entropy of a plurality of digital signals S0-Sn is particularly advantageous. Thus, in embodiments of the invention, the controller 120 can be configured to generate a random number based on at least one bit, preferably a plurality of bits, of at least one digital signal, preferably a plurality of digital signals. The skilled person is aware of several manner of combining the entropy deriving from a plurality of bits, and any known manner can be implemented.

Some embodiments of the invention can generally relate to how the one or more bits of a given digital signal can be selected for the generation step S240. Similarly, further embodiments of the invention can generally relate to how the one or more digital signals can be selected for the generation step S240. Such selection can be implemented with the goal of generating a random number with a sufficiently high entropy. Further embodiments of the invention can generally relate to how the random number generator can recognize, or influence, ambient conditions which allow the random number to be generated with a sufficiently high entropy. Those embodiments will be described more specifically in the following.

As visible in figure 1C, a digital signal S0 is provided as example of the plurality of signals S0-Sn.

As illustrated, in some embodiments each of the plurality of digital signals S0-Sn can codified on a plurality of bits B0-Bn. In the illustrated example, the encoding of the digital signal is binary, so that the bit B0 will be the least significant bit and the bit Bn will be the most significant bit. The description making reference to figure 1C will therefore use this encoding, it will be clear to those skilled in the art that alternative encodings of a numerical value into a digital signal can be implemented. In the following, embodiments will be described which allow an advantageous selection of one or more bits of the digital signal for generating the random number. This is particularly advantageous in order to get random number generator as close as possible to a perfectly random number generator. In order to do so, methods are known which combine entropy from various sources, such as from various bits. A possible implementation is to provide the various bits as input to a Deterministic Random Number Generator, or DRBG. The DRBG can be configured to take a string of bits as input, with a certain amount of entropy per bit, and reduce the size of the input string to output an output string which is perfectly random, or close to perfectly random. However, it is known that the DRBG works better when its input has a minimum of entropy per bit. Thus, selecting bits which have a higher entropy value, instead of blindly considering all bits as input, improves the operation of the DRBG, since the average entropy of the input string is improved.

In preferred embodiments, the controller 120 can be further configured to generate, at step S240 the random number, RN, based on a subset of the plurality of bits B0-Bn. It will be clear to those skilled in the art how one the value of one or more bits can be combined to generate a single random number, RN. For instance, embodiments can be implemented including a DRBG as described above.

In preferred embodiments, the subset can be defined as at most 50% of the bits, preferably at most 35% of the bits, even more preferably at most 25% of the bits. Alternatively, or in addition, the subset can comprise contiguous bits only. Still alternatively, or in addition, the subset does not include the least significant bit, more preferably the two least significant bits.

Still alternatively, or in addition, the subset only includes bits from the least significant half of the plurality of bits B0-Bn. That is with reference to figure 1C, assuming the least significant bit is B0 and the number of bits is N, in some embodiments the subset only includes bits between B0 and Bx, where x=N/2.

For instance, in exemplary embodiments in which the plurality of bits B0-Bn comprises 10 bits, the subset can be formed by bits B2 and B3, in some embodiments by bits B2-B3, in some further embodiments by bits B2-B5. Alternatively, or in addition, in exemplary embodiments in which the plurality of bits B0-Bn comprises 12 bits, the subset can be formed by bits B4 and B5, in some embodiments by bits B3-B5, in some further embodiments by bits B3-B6.

In general, while the above conditions have been found to allow selection of a subset of bits with increased entropy, it is clear that the entropy level of the various bits will be to a certain extent technology dependent. Thus, in yet some alternative embodiments, the subset of bits can be more generally defined as a number of bits lower than n, where n is the total number of bits, such that the bits in the subset have an entropy level higher than the average entropy level of all bits B0-Bn. This can be obtained by a method in which the entropy of all bits is measured, an average entropy value is computed, and then the subset is configured to include only those bits with an entropy higher than the average, or a further limited selection of those bits. Preferably, the subset can be configured to include bits in descending order of entropy, from the bit with the highest entropy level. It will be clear to those skilled in the art that several manners are known for measuring the entropy of a bit, and any of those manners can be implemented in the method described above.

In preferred embodiments, the plurality of bits B0-Bn can consist of a plurality of least significant bits LSB and a plurality of most significant bits MSB. The number of least significant bits LSB and the number of most significant bits MSB can differ from each other. In preferred embodiments, the least significant bits LSB are at least 30% and/or at most 60% of the total bits B0-Bn starting from the least significant bit B0. In some embodiments, the most significant bits MSB are at least 30% and/or at most 60% of the total bits B0-Bn starting from the most significant bit Bn. In some embodiments, the number of least significant bits LSB and of most significant bits MSB is the same, or differ at most by one bit.

In those preferred embodiments, the subset of the plurality of bits B0-Nn can preferably comprise more bits from the plurality of least significant bits LSB than from the plurality of most significant bits MSB. The inventors have realized that the least significant bits LSB generally have a higher entropy level than the most significant bits LSB, so that including more least significant bits LSB in the subset than most significant bits MSB increases the total entropy of the subset. In some embodiments the subset can exclude the least significant bit B0 and/or the most significant bit Bn.

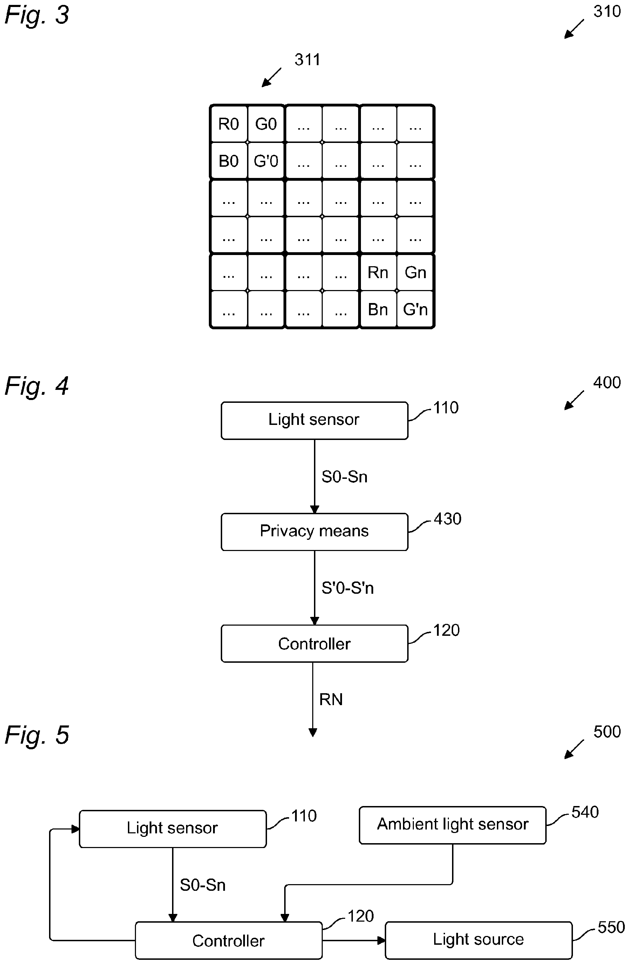

As illustrated in figure 3, an embodiment of the light sensor illustrated as light sensor 310 can comprises a filter filtering the light directed toward the light sensor.

In particular, the filter can be configured to cause
- at least a first one, preferably a first plurality, of the plurality of pixels 311 to receive only green light, in some embodiments thus causing the plurality of pixels 311 not to receive blue and red light, and
- at least a second one, preferably a second plurality, of the plurality of pixels 311 to receive only red light, in some embodiments thus causing the plurality of pixels 311 not to receive blue and green light, and
- at least a third one B0-Bn, preferably a second plurality B0-Bn, of the plurality of pixels 311 to receive only blue light, in some embodiments thus causing the plurality of pixels 311 not to receive green and red light.

That is, the first plurality can receive green light, the second plurality red light and the third plurality blue light. Several filters are known to be able to implement such configuration, one of which is a Bayer filter, as schematically illustrated in figure 3, which is often used in light sensors available in commercial devices, such as in cameras available in smartphones, etc. One peculiar aspect of the Bayer filter is that the number of green pixel is twice the number of blue pixel, and/or twice the number of red pixels. This, in some embodiments, can be advantageously used as will be clarified in the following.

In preferred embodiments, the controller 120 can be configured to generate the random number RN based on digital signals S0-Sn outputted from the first one, of preferably the first plurality of pixels 311. That is, signals outputted from the green pixels can preferably be the basis of the random number generation. In some preferred embodiments, the controller 120 can be configured to generate the random number RN based on the digital signal from one or more pixels. Preferably at least one, more preferably a majority, even more preferably all of the one or more pixels can be a green pixel. This is particularly advantageous as it has been found that, for a given light source, green pixels tend to have a higher amount of entropy than red and blue pixels.

In further preferred embodiments, the controller 120 can be configured to generate the random number RN based on digital signals S0-Sn outputted from at least two pixels, preferably from at least two pixels of the previously described subset of pixels, even more preferably from all of the pixels of the previously described subset of pixels.

In preferred embodiments, the controller 120 can in particular be configured to generate, for instance at a step S240, the random number RN by a digital combination of the digital signals S0-Sn outputted from at least two pixels. The digital combination can be preferably an XOR, a sum, or a difference of the digital signals.

Digitally combining two neighbouring pixels is particularly advantageous, as it is equivalent to reducing the resolution of the image which is formed by the pixels. As more pixels are combined together, it becomes harder to reconstruct the original image. This ensures an increased privacy.

In some further embodiments, the at least two pixels are preferably selected from spatially separated regions of the light sensor 110. In some embodiments, spatially separated regions can be considered to be regions which are separated by at least 10% of diagonal size of the light sensor 110.

In further preferred embodiments, the at least two pixels, or a majority of the at least two pixels, or all of the at least two pixels, belong to the first plurality G0-Gn, G'0-G'n of pixels, namely to the green pixels. This is particularly advantageous as the number of green pixels is higher and, as already indicated, they contain a higher amount of entropy.

It has thus been described how advantageous embodiments of the invention can be implemented thanks to the presence of a filter. This is particularly advantageous as it allows commercially available light sensors, which often are provided with such a filter, to be used for implementing the invention.

Figure 4 schematically illustrates a random number generator 400. Random number generator 400 differs from random number generator 100 due to the presence of privacy means 430.

The general purpose of privacy means 430 is to process the plurality of digital signals S0-Sn before providing those to the controller 120, processed digital signals S'0-S'n, which are provided to the controller 120 instead of the digital signals S0-Sn.

This is particularly useful in case the light sensor 110 is capable of taking pictures. This might be in particular the case, for instance, when the light sensor 110 is a camera.

In this case, the light sensor 110 might take pictures of the environment and the resulting digital signals S0-Sn might be used to generate a random number, as previously described. In those cases, however, there might be a privacy concern since the user of a device, such as a smartphone, might not agree that pictures taken by the device, possibly independently for the generation of the random number, are processed by the controller 120. In some cases, this might even be forbidden by the operating system of the device.

The privacy means 430 can thus be configured to process the plurality of digital signals S0-Sn so that a content of an image, recognizable when decoding the plurality of digital signals S0-Sn, is no longer recognizable when decoding the plurality of processed digital signals S'0-S'n.

That is, the plurality of digital signals S0-Sn might be encoded according to a predetermined encoding algorithm, so that when provided to a display configured to output images based on the predetermined encoding algorithm they result in a first image. The privacy means 430 can thus be configured to process the plurality of digital signals S0-Sn such that, when the processed digital signals S'0-S'n are decoded by the display using the predetermined encoding algorithm, they result in a second image, different from the first image. Preferably, the processing performed by the privacy means 430 can be so that the content of the first image is no longer recognizable in the second image.

It will be clear to those skilled in the art that this can be obtained in several manners, all resulting in the above functionality.

In some embodiments, the privacy means 430 could exchange the odd bits with the even bits of a given signal S0-Sn. That is, for instance, given a digital signal B0, B1, B2, B3, B4, B5, B6, B7, the resulting processed digital signal could be B1, B0, B3, B2, B5, B4, B7, B6. It will be clear that, although this example has been provided on an 8-bit signal, the digital signal can comprise any number of bits. This will be the case for any examples throughout the description although, for clarity of explanation, the 8-bit example will be maintained.

Alternatively, or in addition, the privacy means 430 could remove a predetermined number of bits below a first predetermined bit index and/or above a second predetermined bit index. That is, for instance, given a digital signal B0, B1, B2, B3, B4, B5, B6, B7, a first predetermined bit index equal to 2 and a second predetermined bit index equal to 5, the resulting processed digital signal could be B2, B3, B4, B5, B6, B7, or B0, B1, B2, B3, B4, B5, or B2, B3, B4, B5. The considerations made above for the selection of a subset of bits could also apply to the selection of bits by the privacy means 430.

In embodiments in which the privacy means selects a subset of bits as described above, for instance bits mostly, or all, in the least significant half of the bits, the content of the image is lost very quickly, as the most significant bits carry most of the image information.

Still alternatively, or in addition, the privacy means 430 could maintain a predetermined number of bits which is below a predetermined threshold and comprises the bits with the higher level of entropy.

In other words, each of plurality of digital signals S0-Sn can be codified on a plurality of bits B0-Bn, and the privacy means 430 can be configured to transmit only a subset of the plurality of bits B0-Bn to the controller 120. The subset comprises a lower number of bits than the number of bits of the digital signals S0-Sn. Preferably the bits maintained in the subset are those with the higher level of entropy, as previously described. This is particularly advantageous as it allows both to increase privacy and maintain a sufficiently good entropy source.

In some embodiments, the subset of the plurality of bits B0-Bn can be a minority of the plurality of bits B0-Bn. Alternatively, or in addition, the subset of the plurality of bits B0-Bn can be configured not comprise the least significant bit of the plurality of bits B0-Bn. Further alternatively, or in addition, the subset of the plurality of bits B0-Bn can be configured not to comprise the most significant bit of the plurality of bits B0-Bn. In general, any of the considerations made otherwise in the description for the selection of the subset of bits can apply here, as well as in any other embodiment in which a subset of bits must be selected.

Further alternatively, or in addition, the privacy means 430 could exchange a predetermined number of bits below a first predetermined bit index with a corresponding amount of bits above a second predetermined bit index. That is, for instance, given a digital signal B0, B1, B2, B3, B4, B5, B6, B7, a first predetermined bit index equal to 2 and a second predetermined bit index equal to 5, the resulting processed digital signal could be B6, B7, B2, B3, B4, B5, B0, B1.

As can be gathered from the examples above, the privacy means 430 can be configured to process the signals S0-Sn at the level of a single signal. That is, at least one, preferably a majority, even more preferably all of the processed digital signals S'0-S'n differ from their respective digital signal S0-Sn due to manipulation and/removal of at least some of the bits of the digital signal.

It will however be clear that alternative manners are possible for increasing privacy by operating not at the bit level of the single signal, but by operating on the digital signals themselves, by manipulation and/removal of the digital signal.

For instance, in some embodiments, the privacy means 430 can be configured to transmit only a subset of the plurality of digital signals S0-Sn to the controller 120. In particular, in some preferred embodiments, the subset of the plurality of digital signals S0-Sn is less than 15%, preferably less than 10%, even more preferably less than 5% of the total amount of digital signals and/or of the total number of pixels. The inventors have in particular determined that, in practice, only a few thousands of bits can be needed to generate a 256 bits random number RN. As most modern light detectors, such as CMOS camera sensors in smartphones, have several tens of megapixel, each pixel containing various bits, this approach increases privacy, as most of the image content is lost, while nevertheless still allowing for sufficient entropy for the generation of a high quality random number.

As can be gathered from the examples above, the privacy means 430 can thus also be configured to process the signals S0-Sn so that some of digital signals S0-Sn are sent to the controller 120 while some are not, and/or by modifying the order of the signals, thereby rendering the content of an image encoded on the digital signals S0-Sn no longer recognizable.

Those skilled in the art will therefore recognize that several embodiments are possible for processing the signals S0-Sn such that an image recognizable when decoding signals S0-Sn is no longer recognizable when decoding processed signals S'0-S'n. It is therefore advantageously possible to increase privacy while still allowing sufficient entropy to reach the controller 120 for generating a random number.

Figure 5 schematically illustrates a random number generator 500. Random number generator 500 differs from random number generator 100 due to the presence of ambient light sensor 550 and/or of light source 550.

That is, in some embodiments the random number generator 500 can further comprise an ambient light sensor 540, wherein the ambient light sensor 540 is configured to provide the controller 120 with an indication of an amount of ambient light. Here, the ambient light might be understood as the light of an ambient in which both the ambient light sensor 540 and the light sensor 110 are positioned. For instance, in case of an implementation of the ambient light sensor 540 and of the light sensor 110 in a single device, for instance a smartphone, the ambient light would be the light of the ambient in which the device is operating.

Preferably, if the device has a plurality of sides, the ambient light sensor 540 and the light sensor 110 can be positioned on the same side of the device. This advantageously ensures that the measurement of the ambient light by the ambient light sensor 540 is indicative of the light actually reaching the light sensor 110.

In some embodiments, the controller 120 can be configured to instruct the light sensor 110 to generate the plurality of digital signals S0-Sn based on the amount of ambient light. That is, the light sensor 110 can be controlled so as to measure the light reaching it, and generate the corresponding digital signals S0-Sn, based on an indication from the controller, which is a function of the amount of ambient light provided by the ambient light sensor 540.

This is particularly advantageous as it has been found that the entropy of the digital signals is a function of the amount of ambient light. For instance, when there is no ambient light, the digital signals are expected to all be at their lowest value, except for the effect of thermal entropy on the pixels. Similarly, when the ambient light is above the maximum measuring capability of the light sensor 110, the digital signals are expected to all be at their highest value, due to saturation, which reduces their entropy. In both cases, the entropy which can be derived from the digital values is thus reduced up to the point where only entropy related to thermal and/or electronic causes might be present, which might lower the entropy quality.

Thus, in some embodiments, the controller 120 can be configured to instruct the light sensor 110 to generate the plurality of digital signals S0-Sn when the amount of ambient light is higher than a predetermined minimum value and/or lower than a predetermined maximum value.

In alternative embodiments, the controller 120 can comprise a predetermined function or a predetermined stored information, for instance a look-up table, which estimates a level of entropy as a function of the ambient light. In those embodiments, the controller 120 can be configured to instruct the light sensor 110 to generate the plurality of digital signals S0-Sn when the entropy estimated based on the amount of ambient light is above a predetermined threshold.

In further preferred embodiment, the random number generator 500 can further comprising a light source 550. This is often the case in devices comprising the light sensor 110. For instance, if the device is a smartphone, or a camera, or a laptop, the light sensor 110 can be a camera sensor and the light source 550 can be a flash, or a screen of the device. In general, most modern electronic devices are provided with one or more light sources implemented as LEDs, for instance as flashes or for indicating the status of the device, or implemented as a screen.

In the embodiments in which the light source 550 is implemented, the controller 120 can be configured to instruct the light source 550 to generate light, when the amount of ambient light is lower than a predetermined minimum value. This provides the advantage that, should the ambient light not be at a level sufficient for a good amount of entropy to be provided by the light sensor, additional ambient light can be obtained by turning on the light source 550.

Alternatively, or in addition, the controller 120 can be configured to instruct the light source 550 to generate light when the plurality of digital signals S0-Sn, or more in general the output from any light sensor other than the ambient light sensor, indicates that amount of ambient light is lower than a predetermined minimum value.

Preferably, in some embodiments, the light source can be controlled to output an amount of light which results in the ambient light to reach a predetermined minimum value. This amount can be computed, based on the measured ambient light, which can be measured by the ambient light sensor and/or by the light sensor, or can be obtained by trial and error, for instance by driving the light source 540 to a first level and measuring the ambient light, and then stepwisely increasing the light source 540 to a higher level and measuring the ambient light, until the ambient light reaches a predetermined minimum value. Those embodiments are particular advantageous as they reduce the use of the light source, and thus the use of a battery which might be powering the random number generator 500, or the device which incorporates it.

It has thus been described how, if the entropy which can be derived from the ambient light is not sufficient, the random number generator can wait, until a sufficient ambient light is available, thus avoiding operation of the light sensor when the ambient light does not provide sufficient entropy, which both reduces power consumption and avoids random numbers to be generated with an insufficient amount of entropy. It has further been described how the random number generator 500 can contribute to the ambient light, should it for instance not be possible, or not be preferred, to wait for the ambient light to increase.

In the embodiments described above the light source 550 is not particularly limited to a specific kind of light source. In general, it is preferable that the light outputted by the light source can be detected by the pixels in the light sensor.

In further preferred embodiments, the light source 550 can be configured to output infrared light. This is particularly advantageous since infrared light is mostly not visible to the human eye. In particular, light by the light source 550 is likely to be generated in low ambient light conditions, to compensate for the reduced amount of available ambient light. Those conditions might apply when the user of the random number generator, which might be embodied in an electronic device, is in an environment with low ambient light, such as in a cinema, or maybe in a dark room for sleeping, or similar. In those conditions, particularly if the generation of the random number is not voluntarily initiated by the user, as it might be the case if the operating system of the electronic device can initiate generation independently, it is advantageous if the user is not surprised by the unintended generation of visible light. In this respect, generation of infrared light provides less disturbance to the user while also providing a light source which can generally be detected by most commercially available light sensors.

Additionally, in the embodiments described above the orientation of the light source 550 is not particularly limited to a specific direction. In particular, the light source could shine light into the light sensor, or not. In preferred embodiments, the light source 550 can be oriented, and/or configured, so that light outputted by the light source 550 does not shine directly into the pixels of the light sensor. This is particularly advantageous since some kind of reflections becomes needed for the light from the light source 550 to reach the light sensor. Since the characteristics of the environment in which the random number generator will operate are now known a priori, this reflection can also not be known a priori, which increases the entropy of the light reaching the light sensor and thus improves the quality of the generated random number, RN.

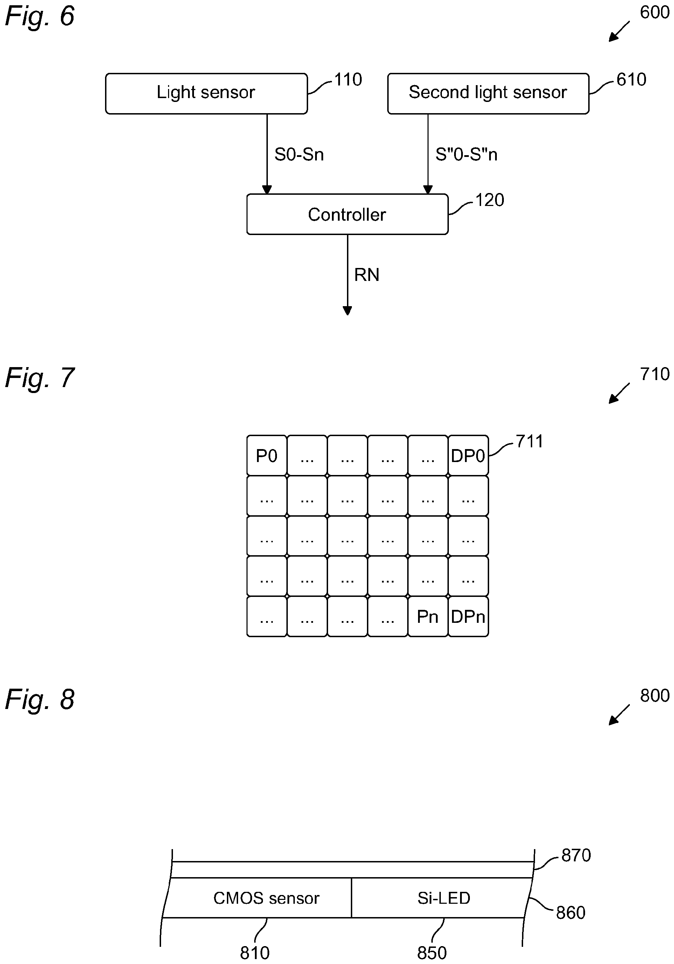

Figure 6 schematically illustrates a random number generator 600. Random number generator 600 differs from random number generator 100 due to the presence of a second light sensor 610.

In general, the second light sensor 610 can be configured in a manner similar to the light sensor 110, so that all considerations made for light sensor 110 also apply to the second light sensor 610. The presence of a second light sensor is common in many commercially available application. For instance, most smartphones are provided with a front and a back camera, which could be implementing the light sensor 110 and the second light sensor 610.

In particular, in preferred embodiments, the second light sensor 610 can comprise a plurality of pixels configured to output a corresponding plurality of second digital signals S"0-S"n encoding a digital value, as previously described for light sensor 110. The controller 120 can then be configured to generate, for instance at step S240, a random number RN based on at least part of at least one of the plurality of digital signals S0-Sn combined with at least part of at least one of the plurality of second digital signals S"0-S"n.

All considerations made for the generation of the random number based on digital signals S0-Sn also apply to second digital signals S"0-S"n. Thus, in comparison with the previous embodiments, the embodiments in which the second light sensor 610 is available further increase the entropy available for the random number generator 600, as further digital signals become available.

Moreover, the embodiments in which the second light sensor 610 is available further increase the usability and reliability of the random number generator 600, since the generation of the random number can be based on the digital signals S0-Sn, or, independently, on the second digital signals S"0-S"n. This therefore renders possible generating a random number even if one of the two light sensor fails.

This further renders possible generating a random number even if one of the two light sensor is not illuminated. For instance, if the random number generator 600 is implemented in a device comprising two cameras as light sensors, and one is a front camera while the other is a back camera, there might be cases in which one of the two cameras receives light and the other camera does not. This is for instance the case when a smartphone is placed on a table. Under those conditions, the random number generator 600 can still ensure generation of a random number by using the light sensor which is currently receiving light.

Thus, in some preferred embodiments, the light sensor 110 and the second light sensor 610 can be oriented in different directions. Preferably, the light sensor 110 and the second light sensor 610 can oriented so that their orientation are separated by an angle of at least 90 degrees, preferably 180 degrees. The direction of orientation can be understood as a normal direction to the plane comprising the pixels of the light sensor. In more preferred embodiments, one of the light sensors 110, 610 can be a front camera while the other one can be a rear camera.

In some embodiments, the random number generator 600 can decide which light sensors to use, such as light sensor 110, or light sensor 610, or both, based on a measurement of the light reaching the respective light sensor. In particular, if it is detected that an average amount of light reaching the respective light sensor is above a predetermined minimum threshold, and/or below a predetermined maximum threshold, the respective light sensor can be used. Alternatively, or in addition, if it is detected that an average amount of light reaching the respective light sensor is below a predetermined minimum threshold, and/or above a predetermined maximum threshold, it can be decided not to use the respective light sensor.

As previously described, there might be privacy concerns when using data from light sensors such as cameras. The previously described approaches can be applied to both light sensors 110, 610. In addition thereto, in embodiments comprising light sensors 110 and 610, the controller 120 can be configured to combine the at least part of at least one of the plurality of digital signals S0-Sn with the at least part of at least one of the plurality of second digital signals S0-Sn. In particular, this can be done so that a content of an image, recognizable when decoding the plurality of digital signals S0-Sn, or when decoding the plurality of second digital signals S"0-S"n, is no longer recognizable when decoding the plurality of processed digital signals S'0-S'n or when decoding the plurality of second digital signals S"0-S"n.

As previously indicated, this can be done by manipulating and/or removing one or more bits of a given digital signal, and/or by manipulating and/or removing one or digital signals. Moreover, due to the availability of two sets of digital signals, this can be done by replacing bits and/or digital signals from the plurality of digital signals S0-Sn with bits and/or digital signals from the plurality of second digital signals S"0-S"n.

For instance, in some embodiments, a subset of bits of a digital signal can be exchanged with corresponding bits of a respective second digital signal. That is, for instance, given a digital signal S0 comprising B0, B1, B2, B3, B4, B5, B6, B7, and a second digital signal S"0 comprising B"0, B"1, B"2, B"3, B"4, B"5, B"6, B"7, the controller 120 can exchange one or more bits from S0 with S"0, such that digital signal S0 becomes B0, B"1, B2, B"3, B4, B"5, B6, B"7, and second digital signal S"0 becomes B"0, B1, B"2, B3, B"4, B5, B"6, B7. The subset of bits is preferably more than 30% and/or preferably less than 70% of the number of bits of a digital signal.

Alternatively, or in addition a subset of bits, for instance B2 and B3, of a first pixel, and a subset of bits, for instance B2' and B3', of a second pixel, the bits of the first pixel can be digitally combined, for instance through an XOR, and so can the bits of the second pixel. The two results are such that they cannot be used to reconstruct any of the given pixels. Similar combinations of the sort can be imagined.

It is therefore clear that the further provision of second light sensor 610 can also result in further options for reducing privacy concerns when using ambient pictures for generating random numbers.

Figure 7 schematically illustrates a random number generator 700. Random number generator 700 differs from random number generator 100 due to the presence of one or more dark pixels 711 in a light sensor 710. It will be clear that dark pixels can be implemented in the light sensor 110 and/or light sensor 610, and more generally in any light sensor described.

In general, dark pixels 711 are pixels of the light sensor 710 which are covered, such that they cannot receive light, or such that they receive significantly less light than the other pixels. In some embodiments, significantly less light can be understood to mean that, give a light source illuminating the light sensor 710, the dark pixels receive at most 10%, preferably at most 5%, even more preferably at most 1% of the light received by the other, non dark, pixels.

Dark pixels are often present in commercially available light sensors for a plurality of reasons. For instance, they can be pixels which are manufactured in the light sensor but not used in the device. Alternatively, or in addition, they can be used for tuning and/or calibrating of the non-dark pixels. Still alternatively, or in addition, they can be used for test purposes.

The light sensor 710 therefore comprises, in addition to the previously described pixels, a plurality of dark pixels 711, also indicated as DP0-DPn, which are configured to output a corresponding plurality of third digital signals S0-Sn encoding a digital value. The controller 120 can then be configured to generate, for instance at step S240, a random number RN based on at least part of at least one of the plurality of digital signals S0-Sn combined with at least part of at least one of the plurality of third digital signals S0-Sn.

The considerations previously made for how the random number can be generated on the basis of the illuminated pixels are also valid for the dark pixels.

The use of the dark pixels by the generation of the random number is particularly advantageous since it allows a further source of entropy to be included in the generation of the random number, namely thermal entropy. Moreover, the thermal entropy from the dark pixels is available independently on whether the light sensor 710 is illuminated, so that generation of the random number can be made possible, or improved, in low ambient light conditions.

It will be clear to those skilled in the art that various manners are available for combining the plurality of digital signals from the illuminated pixels to the third plurality of digital signals, from the dark pixels. In particular, several manners are known to those skilled in the art as to how various bits, or various digital signals, can be processed to generate a random number which combines the entropy available at the various input sources.

In some embodiments, the controller 120 can in particular be configured to add the at least part of at least one of the plurality of digital signals S0-Sn to the at least part of at least one of the plurality of third digital signals S0-Sn. That is, the value of one or more bits from one or more of the digital signals S0-Sn generated by the illuminated pixels can be combined with an XOR operation to the value of one or more bits from one or more of the third digital signals S0-Sn generated by the dark pixels.

That is, for instance, if an illuminated pixel generates a digital signal S0 comprising B0, B1, B2, B3, B4, B5, B6, B7, and a dark pixel generates a digital signal S0 comprising B‴0, B‴1, B‴2, B‴3, B‴4, B‴5, B‴6, B‴7, then the values B0 XOR B‴0, B1 XOR B‴1, B2 XOR B‴2, B3 XOR B‴3, B4 XOR B‴4, B5 XOR B‴5, B6 XOR B‴6, B7 XOR B‴7 can be provided to the controller.

Alternatively, or in addition, in some embodiments each of plurality of digital signals S0-Sn can be codified on a plurality of bits B0-Bn, and each of plurality of third digital signals S0-Sn can be codified on a plurality of bits B0-Bn. The controller 120 can then be configured to generate, for instance at step S240, the random number RN based on at least some bits from at least one of the plurality of digital signals S0-Sn and at least some bits from at least one of the plurality of third digital signals S0-Sn.

That is, instead of adding together the values of the bits, bits from the illuminated pixels can be combined with bits from the dark pixels. For instance, if an illuminated pixel generates a digital signal S0 comprising B0, B1, B2, B3, B4, B5, B6, B7, and a dark pixel generates a digital signal S0 comprising B‴0, B‴1, B‴2, B‴3, B‴4, B‴5, B‴6, B‴7, then any combination of those bits, such as, for instance, B0, B1, B2, B3, B4, B5, B6, B7, B‴0, B‴1, B‴2, B‴3, B‴4, B‴5, B‴6, B‴7, or for instance, B0, B1, B2, B3, B4, B‴5, B‴6, B‴7, can be provided to the controller.

In the embodiments described above, several techniques have been described for compensating for a low ambient light, which might result in insufficient entropy. For instance, it has been described that a light source could be used to increase the available ambient light, or that the entropy from dark pixels could be combined with that of the illuminated pixels. Those embodiments therefore rely on the contribution by means other than the pixels themselves.

In some embodiments of the invention, however, the lower entropy caused by low ambient light, can be improved by appropriately combining the output of at least two pixels.

In particular, in some embodiments the controller 120 can be configured to measure ambient light. This could be achieved, as previously determined, by a measurement from the ambient light sensor or any of the light sensors, in a manner per se known. The controller 120 can be further configured to generate, for instance at step S240, the random number RN based on the combination of at least part of a subset among the plurality of digital signals S0-Sn, if it is determined that ambient light is lower than a predetermined minimum value.

The combination can be performed at bit level, for instance by combining the value of two or more bits, from different digital signals and/or at the signal lever, for instance by combining the value of two or more different digital signals.

In some embodiments, an entropy level for a single digital signal can be estimated based on the measured ambient light, and the number of digital signals which are combined can be chosen so that a predetermined entropy is reached. This provides the advantage that a sufficient number of digital signals is considered, without the need to processing all available digital signals.

The combination can take any form and any of the previously described combination can be implemented. In preferred embodiments the combination can be a sum, and/or an xor operation.

In the embodiments described above, the light sensor has been described as logical unit and various specific physical implementation can be applied for it, as known to those skilled in the art. For instance, any of the light sensors can be implemented by a CMOS sensor with a plurality of pixels, such as those commonly used as camera sensors in various electronics devices.

Figure 8 schematically illustrates a possible further specific physical implementation of light sensor 810, and more in general of a random number generator 800.

In particular, the random number generator 800 can comprising a light sensor 810 and a light source 850, wherein the light sensor 810 is implemented as a CMOS sensor in a Silicon layer and the light source 850 is implemented as Si-LED in the same Silicon layer 810.

That is, a silicon wafer could be used to implement, on the same wafer, the light sensor 810, through a CMOS process, and the light source 850 as a Si-LED. This is particularly advantageous as it allows the light sensor 810 and the light source 850 to be realized and packaged in a single device, since they share the same silicon wafer. This reduces costs, as well as making the random number generator 800 particularly compact.

Moreover, in some embodiments, this can be particularly advantageous as the light source 850 can be configured so that outputted light is directed away from the random number generator 800, so that most of the light reaching the light sensor does so by reflection. In some embodiments, most can be understood as being at least 50%, preferably at least 70%, even more preferably at least 90%. The advantages of reflecting the light on an unknown environment prior to the detection by the light sensor have been previously described.

It will be clear that, in some embodiments, the CMOS process can be used to implement further circuitry, in addition to the light sensor 810. For instance, the controller 120 can be implemented as CMOS circuitry in the same Silicon layer 860, preferably through the same process used for implementing the light sensor 810 although two different CMOS processes could also be used.

In some embodiments, the random number generator 800 could further comprise a reflective layer 870 covering at least the light sensor 810 and the light source 850. The purpose of the reflective layer 870 is to reflect light from the light source 850 into the light sensor 810. While this reduces the advantage described above, as it eliminates the entropy introduced by the unknown reflection in the environment, the inventors have determined that the entropy available through the reflection in the reflective layer 870 might by sufficient.

On the other hand, the presence of the reflective layer can result in the need to output less light from the light source 850 and thus lower power consumption. Moreover, in some embodiments, it can be possible to reflect most light so as to avoid illuminating the environment, with the same advantages already described for the infrared illumination. In some embodiments, most can be understood as being at least 50%, preferably at least 70%, even more preferably at least 90%.

In the embodiments described above, the random number generator has been described in isolation, as independent device. It is possible to implement the random number generator as an independent electronic device. At the same time, it is advantageous to implement it as part of a device also offering other functionalities.

In particular, an electronic device, can be implemented comprising any of the random number generators described, wherein the electronic device is any device which comprises a light sensor. Preferably, the invention can therefore be applied to a mobile phone, a smartphone, a tablet, a laptop, a PC and a smartwatch, but not only. Many more modern devices, such as printers, refrigerators, and others, are provided with light sensors for multiple uses. Any of those devices can implement the invention without the need to include further hardware. This is particularly advantageous since it allows the functionality offered by the random number generator to be used by the electronic device. In particular, the generation of high quality random numbers is crucial to several telecommunication protocols, which might be implemented by the electronic device. By generating the random numbers within the device itself, safety against hacking is increased as there is no need for the transmission of the random numbers from the random number generator to the electronic device.

Furthermore, most electronic devices nowadays contain a camera, or more generally some sort of light sensor, which can be used to implement the light sensors, or the ambient light sensors, described as part of the random number generators. In this manner, the random number generators can reuse hardware which is already available.

More specifically, in some embodiments any of the light sensor described above can be any of a camera, an ambient light sensor, an optical time-of-flight sensor implemented by the device. Time-of-flight sensors are system employing time-of-flight techniques to resolve distance between a light sensor and a subject, by measuring the round trip time of an artificial light signal provided by a light source. Those sensors are finding more and more use in electronic devices. For instance, a single detecting device, such as a CMOS sensor, could be operated first as an ambient light sensor, for the purpose of detecting ambient light, and then as a light sensor as previously described, where the configuration of the light sensor can be set as a function of the detected ambient light.

It is therefore clear that the invention can be implemented as part of an electronic device by using several of the hardware already available. In some embodiments, this enables the light sensor to be configured to generate the plurality of digital signals by taking at least one picture. It is clear to those skilled in the art that a digital picture is a collection of digital signals such as those described in the embodiments above. In some further preferred embodiments, the light sensor can be configured to take the one or more pictures without user input.

In particular, in some embodiments, the random number generator can be configured to receive, from the electronic device, a signal indicating that a random number is needed for the operation of the electronic device. The controller 120 can then be configured to instruct the light sensor to take a picture upon receiving such signal from the electronic device. In this manner, operation of the random number generator can be transparent to the user of the electronic device. In preferred embodiments, the picture can be deleted after the controller 120 has generated the random number on the basis of the digital signals encoding the picture, preferably immediately after.

Several commercial electronic devices are known to implement the capability of taking various consecutive pictures. This can be implemented as the capability to take a video or a so called "live photo". In those cases, the light sensor can be configured to generate the plurality of digital signals S0-Sn by taking a plurality of consecutive pictures.

Moreover, the live photos, or short videos, allow the implementation of various algorithms which can detect if an image, corresponding to any frame of the live phots, is natural or potentially manipulated by a hacker to generate non-random bits. Various such algorithms are known in the art and can be used in the invention. If the algorithm detects that the image has been manipulated, the image can be discarded and a new image can be taken for the purpose of generating a random number.

Additionally, several commercial electronic devices are known to further comprise an accelerometer. In those cases, the controller 120 can be configured to control the light sensor to take the at least one picture, or the plurality of consecutive pictures, when the accelerometer indicates movement lower than a predetermined threshold.

In this manner the picture is taken when the electronic device is not moving, and thus likely not in use. This reduces the likelihood of the user of the electronic device being shown in the picture, which reduces potential privacy concerns. Moreover, the electronic device is not currently in use by the user, the resources needed for the generation of the random number by the controller 120, which might be implemented as software by a CPU of the electronic device, do not impact performance of the CPU while the user is using the electronic device.

In the description above, several embodiments have been described which comprise various devices such as the controller 120, the privacy means 430, etc. When the embodiments are implemented in a portable device, such as a smartphone or a tablet, it is common for those devices to have various layers of security, both in terms of hardware and software. In those case, it is preferred for one or more, preferably all, of the described devices to be implemented in the layers having a higher, preferably the highest, level of security, so as to increase privacy of the user.

While several embodiments with various feature have been discussed and/or illustrated, it will be clear to those skilled in the art that the invention is not limited to those specific combinations of features. Instead, further embodiments can be obtained by combining features separately from one or more embodiments, within the scope of the claims.

### List of reference numerals

100: random number generator
110: light sensor
111: pixel
120: processing unit
B0-Bn: bit
S0-Sn: digital signal
P0-Pn: pixel
RN: random number
200: method for generating random numbers
S210: receiving digital signals
S220: analyzing digital signals
S230: selecting digital signals
S240: generating random number
310: light sensor
311: pixel
G0-Gn, G'0-G'n: green pixel
B0-Bn: blue pixel
R0-Rn: red pixel
400: random number generator
430: privacy means
S'0-S'n: processed digital signal
500: random number generator
540: ambient light sensor
550: light source
600: random number generator
610: light sensor
710: light sensor
711: dark pixel
DP0-DPn: dark pixel
800: random number generator
810: light sensor
850: light source
860: silicon layer

## Claims

1. A random number generator (100, 400, 500, 600, 800) comprising
a light sensor (110, 310, 710, 810), comprising a plurality of pixels (111, 311, P0-Pn) configured to output a corresponding plurality of digital signals (SO-Sn), each digital signal encoding a digital value representative of an amount of light reaching the respective pixel (111, 311, P0-Pn, P'0-P'n),
a controller (120), configured to generate (S240) a random number (RN) based on at least part of at least one of the plurality of digital signals (S0-Sn).

2. The random number generator (100, 400, 500, 600, 800) according to claim 1, wherein the controller (120) is configured to
- receive (S210) the plurality of digital signals (SO-Sn),
- analyze (S220) the plurality of digital signals (SO-Sn),
- select (S230) at least one digital signal having a digital value higher than a predetermined minimum value and/or lower than a predetermined maximum value,
- generate (S240) a random number (RN) based on the selected at least one digital signal.

3. The random number generator (100, 400, 500, 600, 800) according to any previous claim, wherein the light sensor (310) comprises a filter,
the filter being configured to cause
- at least a first one (GO-Gn, G'0-G'n), preferably a first plurality (GO-Gn, G'0-G'n), of the plurality of pixels (311) to receive only green light,
- at least a second one (R0-Rn), preferably a second plurality (R0-Rn), of the plurality of pixels (311) to receive only red light,
- at least a third one (BO-Bn), preferably a second plurality (BO-Bn), of the plurality of pixels (311) to receive only blue light,
wherein the controller (120) is configured to generate (S240) the random number (RN) based on digital signals (SO-Sn) outputted from the first one (GO-Gn, G'0-G'n), preferably first plurality (GO-Gn, G'0-G'n), of the plurality of pixels (311).

4. The random number generator (100, 400, 500, 600, 800) according to any of claims 1 to 3, wherein
the controller (120) is configured to generate (S240) the random number (RN) based on digital signals (SO-Sn) outputted from at least two pixels.

5. The random number generator (100, 400, 500, 600, 800) according to claim 4,
wherein the controller (120) is configured to generate (S240) the random number (RN) by a digital combination of the digital signals (SO-Sn) outputted from at least two pixels,
wherein the digital combination can be preferably an XOR, a sum, or a difference of the digital signals.

6. The random number generator (100, 400, 500, 600, 800) according to claim 4 dependent on claim 3, or claim 5 dependent on claim 3, wherein
the at least two pixels belong to the first plurality (GO-Gn, G'0-G'n).

7. The random number generator (100, 400, 500, 600, 800) according to any previous claim, wherein
each of plurality of digital signals (SO-Sn) is codified on a plurality of bits (BO-Bn),
the controller (120) is further configured to generate (S240) the random number (RN) based on a subset of the plurality of bits (B0-Bn).

8. The random number generator (100, 400, 500, 600, 800) according to claim 7, wherein
the plurality of bits (B0-Bn) consists of a plurality of least significant bits (LSB) and a plurality of most significant bits (MSB),
the subset of the plurality of bits (B0-Bn) comprises more bits from the plurality of least significant bits (LSB) than from the plurality of most significant bits (MSB).

9. An electronic device, comprising the random number generator (100, 400, 500, 600, 800) according to any previous claim.

10. The electronic device according to claim 9,
wherein the light sensor (110, 310, 710, 810) is any of a camera, an ambient light sensor, an optical time-of-flight sensor.

11. The electronic device according to claim 9 or 10,
wherein the light sensor (110, 310, 710, 810) is configured to generate the plurality of digital signals (SO-Sn) by taking at least one picture, preferably without user input.

12. The electronic device according to claim 9 or 10,
wherein the light sensor (110, 310, 710, 810) is configured to generate the plurality of digital signals (SO-Sn) by taking a plurality of consecutive pictures.

13. The electronic device according to claim 11 or 12,
further comprising an accelerometer,
wherein the controller (120) is configured to control the light sensor (110, 310, 710, 810) to take the at least one picture or the plurality of consecutive pictures when the accelerometer indicates movement lower than a predetermined threshold.
